# EUROPEAN PATENT SPECIFICATION

(11) **EP 3 744 627 B1**
(45) Date of publication and mention of the grant of the patent: **03.01.2024**
(21) Application number: 20172649.4
(22) Date of filing: 04.05.2020
(51) Int. Cl.: B64C 1/12, B32B 37/14, B32B 7/12, B32B 7/05, B32B 5/20, B32B 5/14, B32B 3/12, B29C 65/48, B29D 99/00, B32B 5/02, B32B 15/08, B32B 15/12, B32B 15/14, B32B 15/20, B32B 27/12, B32B 29/02

(54) **STRINGERLESS SANDWICH FUSELAGE PANELS**
STRINGERLOSE-SANDWICH-RUMPFPLATTEN
PANNEAUX DE FUSELAGE EN SANDWICH SANS RAIDISSEURS

(30) Priority: 29.05.2019 US 201916425059
(43) Date of publication of application: 02.12.2020
(73) Proprietor: The Boeing Company, Arlington, VA 22202 (US)
(72) Inventor: SONG, Weidong, Chicago, IL 60606-1596 (US)
(74) Representative: Arnold & Siedsma

(56) References cited:
- WO-A1-02/28709
- US-A- 5 518 796
- US-A- 5 776 579
- US-A1- 2014 119 930

## Description

### TECHNICAL FIELD

The present disclosure relates generally to aircraft support structures, and in particular, to sandwich fuselage panels.

### BACKGROUND

In aircraft and launch vehicle construction, various surfaces, such as the skin of an aircraft, may be attached to structural support members known as stringers or stiffeners. In aircraft fuselage, stringers are attached to the fuselage skin run in the longitudinal direction of the aircraft. They are primarily responsible for transferring loads acting on the skin onto internal structures including frames. In the wings or horizontal stabilizer of an aircraft, stringers attach to the wing skin and their primary function here also is to transfer the loads acting on the wings onto internal structures such as ribs and spars.

Traditional manufacturing of stiffening members on composite parts is very tooling and labor intensive. Given the large size of wings and fuselages, forming and handling equipment for these parts is very expensive, heavy, and require extensive factory floor space, labor, and time.

Consequently, there exists a need for improved systems and methods for manufacturing structural panel assemblies for aircraft and other vehicles that reduce the need for labor, extensive tooling, factory space, and material handling equipment for support members, while maintaining desired structural strength and weight considerations.

The abstract of US 2014/119930 A1 states: 'A method of the present disclosure includes of repairing a core stiffened structure with structural foam. Another method includes splicing core members together using structural foam. Another method includes joining a core member to a structure using structural foam. Another method includes using structural foam to stabilize a core member during a machining process. Another method includes stabilizing a core member with structural foam to prevent the core member from crushing in autoclave pressure. The present disclosure further includes a core stiffened structure have a core member with structural foam therein.'

The abstract of WO 02/28709 A1 states: 'The present invention disclosed herein provides a component frame for supporting a component in a vehicle. The component may be a door, a window or another piece of equipment on an aircraft that requires a flush-fitting interface with the aircraft. The component frame comprises an outer skin having a recessed edge disposed generally around the perimeter of the component frame . An inner skin is disposed within the aircraft and serves to sandwich a honeycomb core between itself and the outer skin.'

### SUMMARY

The following presents a simplified summary of the disclosure in order to provide a basic understanding of certain embodiments of this disclosure. This summary is not an extensive overview of the disclosure, and the scope of the present disclosure is defined according to the appended claims. Its sole purpose is to present some concepts disclosed herein in a simplified form as a prelude to the more detailed description that is presented later.

Provided are various sandwich panel assemblies with foam adhesive core structures, and associated methods of operation and manufacture. Specifically, a sandwich fuselage panel (212-A) according to appended independent claim 1 is provided, which comprises an outer skin member (302) and an inner skin member (304) coupled to the outer skin member at a first edge (230-A) and a second edge (230-B). The outer skin member and the inner skin member form a cavity (22) comprising: a center portion (222), a first transition portion (224-A) extending from the center portion to the first edge, and a second transition portion (224-B) extending from the center portion to the second edge. A cured foam adhesive (532) occupies each of the first transition portion and the second transition portion.

The sandwich fuselage panel further comprises a core structure (610) occupying the center portion of the cavity. The core structure is a honeycomb structure (400). The honeycomb structure may comprise at least one of: metal, paper, or polymer. The core structure may be coupled to each of the outer skin member and the inner skin member via an adhesive layer (412, 414).

The cured foam adhesive may further occupy the center portion of the cavity. A density of the cured foam adhesive in the first transition portion may gradually increase from the center portion to the first edge, and a density of the cured foam adhesive in the second transition portion may gradually increase from the center portion to the second edge. The cured foam adhesive may comprise a polymer foam adhesive.

The outer skin member and the inner skin member may be curved. A subsequent panel (210-A) may be coupled to the sandwich fuselage panel at the first edge.

Other implementations of this disclosure include corresponding devices, systems, and methods, which fall within the scope of the appended claims. These other implementations may each optionally include one or more of the following features. For instance, provided is an aircraft (100) comprising one or more sandwich fuselage panels (210-A, 212-A, 214-A) as described.

Also provided is a method (700) according to appended independent claim 9, comprising applying (706) a foam adhesive (530) within a cavity (220) formed by an outer skin member (302) coupled to an inner skin member (304) at a first edge (230-A) and a second edge (230-B). The cavity comprises: a center portion (222), a first transition portion (224-A) extending from the center portion to the first edge, and a second transition portion (224-B) extending from the center portion to the second edge. The foam adhesive is applied to a first portion (302-A) of the outer skin member within the first transition portion and a second portion (302-B) of the outer skin member within the second transition portion. The method further comprises curing (710) the foam adhesive such that the foam adhesive expands to fill the respective portions of the cavity.

The method further comprises coupling (704) a core structure (610) to each of the outer skin member and the inner skin member within the center portion of the cavity. The core structure comprises a honeycomb structure (400). The core structure may be coupled to each of the outer skin member and the inner skin member via an adhesive layer (412, 414). The method may further comprise applying (706) the foam adhesive to a third portion (302-C) of the outer skin member within the center portion of the cavity.

After curing, a density of the foam adhesive in the first transition portion gradually increases from the center portion to the first edge, and a density of the foam adhesive in the second transition portion gradually increases from the center portion to the second edge. The foam adhesive may comprise a polymer foam adhesive. The outer skin member and the inner skin member may be curved. The outer skin member may comprise one or more selected from the following: aluminum, titanium, and carbon fiber reinforced polymer (CFRP).

These and other embodiments are described further below with reference to the figures.

### BRIEF DESCRIPTION OF THE DRAWINGS

The disclosure may best be understood by reference to the following description taken in conjunction with the accompanying drawings, which illustrate particular embodiments of the present disclosure, as well as examples not falling within the scope presently being claimed, but which may be useful for understanding aspects thereof.
FIG. 1 is a schematic illustration of an aircraft that may include stringerless sandwich fuselage barrels as described herein, in accordance with one or more embodiments;
FIGS. 2A, 2B, 2C, and 2D illustrate various perspectives and cross-sectional views of a stringerless sandwich fuselage barrel, in accordance with one or more embodiments;
FIG. 3 is an illustration of a perspective cross-sectional view of a stringerless sandwich fuselage panel, in accordance with one or more embodiments;
FIG. 4 illustrates a honeycomb core structure of a stringerless sandwich fuselage panel in accordance with an illustrative embodiment;
FIGS. 5A and 5B illustrate a cross-sectional view of a stringerless sandwich fuselage panel with a foam adhesive core in accordance with an illustrative example not falling within the scope presently being claimed;
FIGS. 6A and 6B illustrate a cross-sectional view of another stringerless sandwich fuselage panel with a hybrid core configuration in accordance with an illustrative embodiment;
FIG. 7 is an illustration of an example process for manufacturing a stringerless sandwich fuselage barrel, in accordance with an illustrative embodiment;
FIG. 8 is a block diagram of aircraft production and service methodology that may utilize methods and assemblies described herein.

### DETAILED DESCRIPTION OF PARTICULAR EMBODIMENTS

In the following description, numerous specific details are set forth in order to provide a thorough understanding of the presented concepts. The presented concepts may be practiced without some of these specific details. In other instances, well known process operations have not been described in detail so as to not unnecessarily obscure the described concepts. While some concepts will be described in conjunction with the specific examples, it will be understood that these examples are not intended to be limiting. On the contrary, it is intended to cover alternatives, modifications, and equivalents as may be included within the scope of the present disclosure as defined by the appended claims.

For example, the techniques of the present disclosure will be described in the context of particular aircraft structures, such as skin panels. However, it should be noted that the techniques and mechanisms of the present disclosure may apply to various other panel assemblies of various other vehicles or building structures. In the following description, numerous specific details are set forth in order to provide a thorough understanding of the present disclosure. Particular example embodiments of the present disclosure may be implemented without some of these specific details. In other instances, well known process operations have not been described in detail in order not to unnecessarily obscure the present disclosure. Various techniques and mechanisms of the present disclosure will sometimes be described in singular form for clarity. However, it should be noted that some embodiments include multiple iterations of a technique or multiple instantiations of a mechanism unless noted otherwise.

### Overview

The present disclosure describes novel sandwich fuselage panel assemblies for aircraft and other vehicles or industrial systems. As described herein, the terms "stringers," "longerons," "stiffeners," "support structures," and "support members" may be used interchangeably. The sandwich fuselage panels described herein may be constructed without the need for such support structures while maintaining desired structural integrity, thereby reducing costs for labor and materials, as well as reducing total manufacturing time.

Traditional manufacturing of stiffened stringer panels involves manual placement of support tools, which may be very labor and tooling intensive. Such existing systems may implement complex guidance systems, such as optical laser templates, to guide manual placement of support tools onto panels. Additionally, automated pick and place systems may be used to position support tools based on guidance systems, but may be expensive and labor intensive to set up over iterations of pick and place movement and measurement tests to program the automated systems to locate items (tools, stringers, and other panel parts) properly. As such, ensuring the accurate placement of the support tools or stringers may result in increased labor requirements and longer build times. The size and flexibility of such components can also make it cumbersome or time consuming to transport, locate, and align the parts, which may require large equipment and floor space. For example, a 110 foot stringer may require a support tool of the same length. Handling of such large support tools may result in increased costs and decrease efficiencies in manufacturing throughput.

Sandwich panel assemblies improve upon traditional stringer panels. A sandwich fuselage panel typically comprises a core structure sandwiched between two panels or skin members. In other words, two high strength, high modulus skin members form a panel with a cavity which is filled by a thick, light weight, low strength core structure, such as a honeycomb structure. The sandwich panels described herein utilize expandable foam adhesives as core structure materials. Such foam adhesives may comprise sheets or strips of thermoplastic or thermoset polymers. In some cases, the polymer can include filler materials in the form of short fibers, plates, or particles. Filler material can be carbon fiber, fiber glass, ceramic or metal particles, such as preformed ceramic or metal foams. In some embodiments, the foam adhesive may be provided as extruded beads.

Such foam adhesives are easily sized to fit the geometry of the cavity space between the skin members. Due to the tacky nature of the foam adhesives no additional pre-bonding adhesives are required to apply the foam adhesive core material to the skin members prior to curing. As the panel is heated and cured, the foam adhesive may expand up to 450% or more to completely fill the cavity as a lightweight, low density core structure. As the foam adhesive expands, it conforms to the specific geometry and dimensions of the cavity. Thus, an exact fit of the cavity may be achieved without additional tooling and forming of the core structure as required by existing panels utilizing honeycomb structures. The expansion of the foam adhesive may also allow for any potential inaccuracies during placement of the foam adhesive sheet on the skin members.

The foam adhesive may provide additional structural improvements based on the geometry of the cavity. The cavity of sandwich panel assemblies described herein may comprise a center portion with tapering transition portions which gradually narrow toward the edges where skin members contact and join together. Due to the relatively larger quantity of adhesive material for a given volume toward the edges, the cured core structure may include a variable density that gradually increases from the center portion to the edges, providing increased strength toward the edges where attachment points are located.

In embodiments of the present disclosure, the foam adhesives are implemented with traditional honeycomb structures, as a hybrid core structure. In the various embodiments, the center portion of the cavity includes a uniform or substantially uniform height between the skin members. Thus a lighter weight honeycomb core structure may be implemented in high acreage areas of uniform width eliminating much of the precise tooling to shape the honeycomb structure. Foam adhesives are applied to the tapering transition portions further eliminating tooling to form the core structure to the transitioning geometry, and providing the desired variable density. The foam adhesive may also function as an edge enclosure for the exposed portions of the central honeycomb structure.

As such, the described hybrid core structures include the desired structural characteristics of foam adhesives while being lighter and less dense than core structures comprising only foam adhesive, but cheaper and faster to manufacture than core structures comprising only honeycomb structures. Furthermore, the described sandwich panel assemblies reduce manufacturing costs and time by eliminating the need for support structures, such as stringers, to support a higher production rate, while maintaining a similar design space for systems and integrations for existing models of aircraft, such as the 787 style architecture.

### Example Embodiments

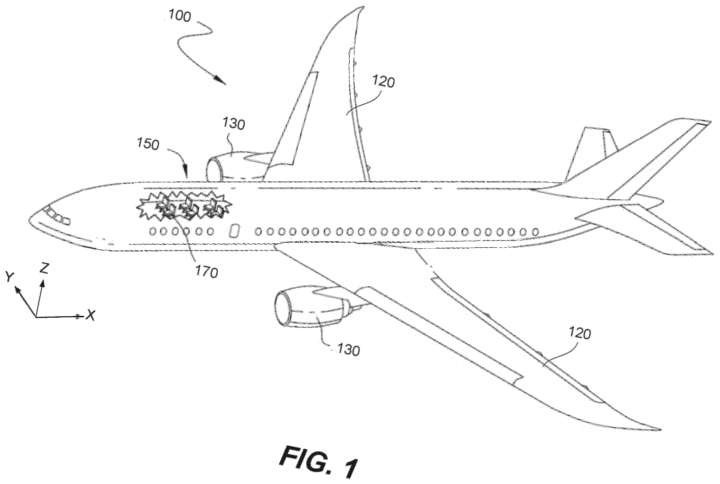

To better understand various aspects of fuselage barrel panels, a brief description of an aircraft and aircraft wing is now presented. FIG. 1 is a schematic illustration of aircraft 100, in accordance with some embodiments. As depicted in FIG. 1, aircraft 100 is defined by a longitudinal axis (X-axis), a lateral axis (Y-axis), and a vertical axis (Z-axis). In various embodiments, aircraft 100 comprises fuselage 150 with interior 170. Aircraft 100 includes wings 120 coupled to fuselage 150. Aircraft 100 also includes engines 130 supported by wings 120. Fuselage 150 may be constructed from one or more fuselage barrel sections, each barrel section comprising one or more panel assemblies. Aircraft 100 shown in FIG. 1 is one example of a vehicle in which a stringerless sandwich fuselage barrels may be implemented to form the structure of fuselage 150, in accordance with an illustrative embodiment. The described structures may also be implemented for various other portions of aircraft 100, such as wings 120.

In general, fuselages of a modern aircraft are typically constructed from one or more panels. Such panels may be stiffened skin structures with an outer skin supported by circular frame structures and other support structures, such as bulkheads, longerons, and stringers that stiffen the skin. For example, a panel may comprise an outer skin member with an inner surface attached to a frame. The frame structures reside within the skin and are positioned in a parallel configuration and at given intervals. The frame structures are attached to the skin via shear ties, which are fastened to the skin. Longerons are integrally formed with the skin and extend between the shear ties to provide increased rigidity and strength. Doublers may also be formed with the skin to provide increased strength in doorway and window areas.

The panel may be further reinforced with one or more stiffened support structures, such as stringers, coupled to the panel along the inner surface. Typically, the stringers may be configured such that the lengths of stringers are oriented to be substantially parallel to the direction of flight. The stringers may be configured with various cross-sectional shapes for different structural properties. Various stringer types may include closed cross-sectional shapes such as hat-shape stringers, or open cross-sectional shapes, such as L-shape stringers. Other formed stringer types may include blade stringers, Z-shape stringers, C-shape stringers, etc.

However, construction of such fuselage panels is very expensive and time consuming. Traditional manufacturing of stiffening members on composite parts can be tooling intensive. Given the scale of aircraft wings and fuselages, forming and handling equipment for these parts can be expensive, heavy, and require extensive factory floor space. Use of such equipment can also incur undesirable amounts of time and labor.

Sandwich structures may be used for fuselages and fuselage barrels, which significantly reduce or eliminate the amount of support structures required. A panel of a sandwich structure typically includes thin face sheets or skin members of high strength or modulus as an exterior with a thick low weight core material in between the face sheets. As used herein, the terms "face sheet," "skin panel," and "skin member" may be used interchangeably to refer to the external surface structure of described panel structures. Such structural combination provides high bending stiffness (higher moment of inertia), better skin stability, better transverse shear capability, and optimized weight-to-strength ratio.

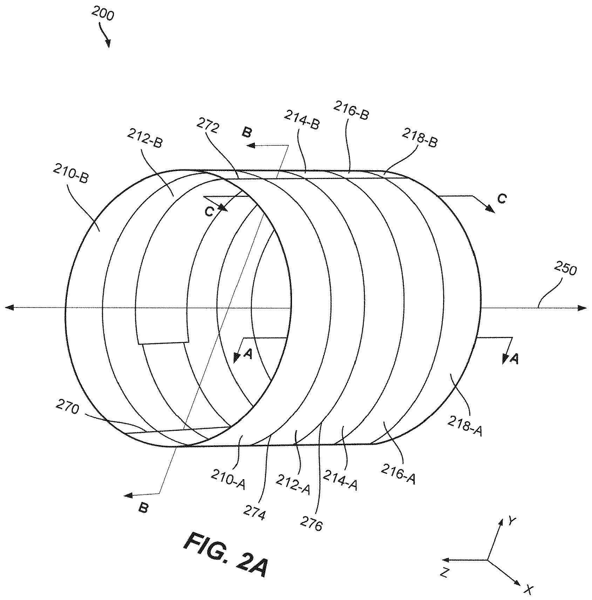

An example of a stringerless sandwich fuselage barrel 200 that may be implemented with various embodiments of the present disclosure is described with reference to FIGS. 2A-2D.

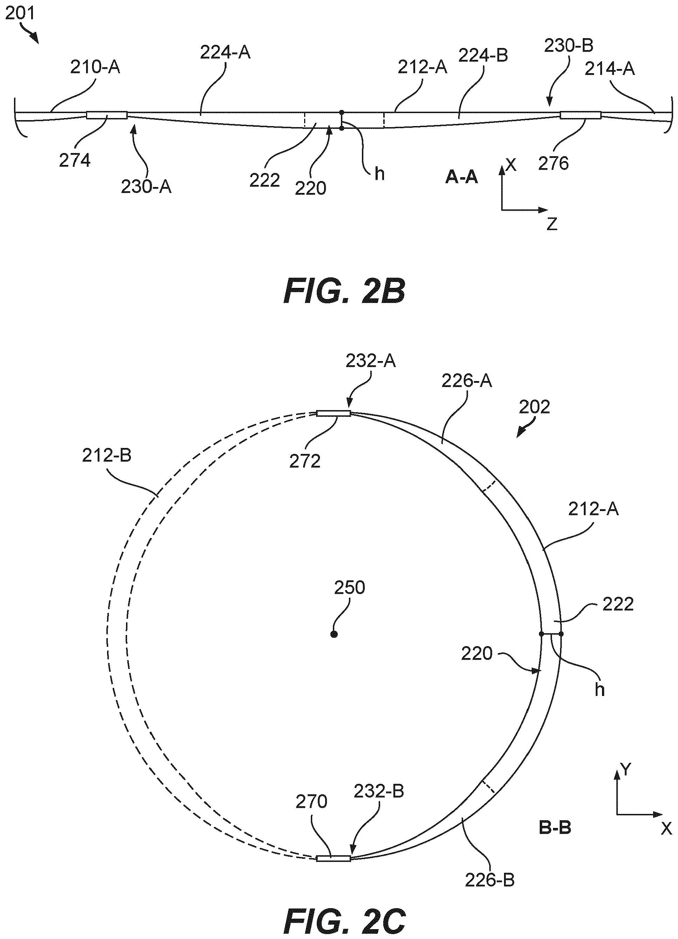

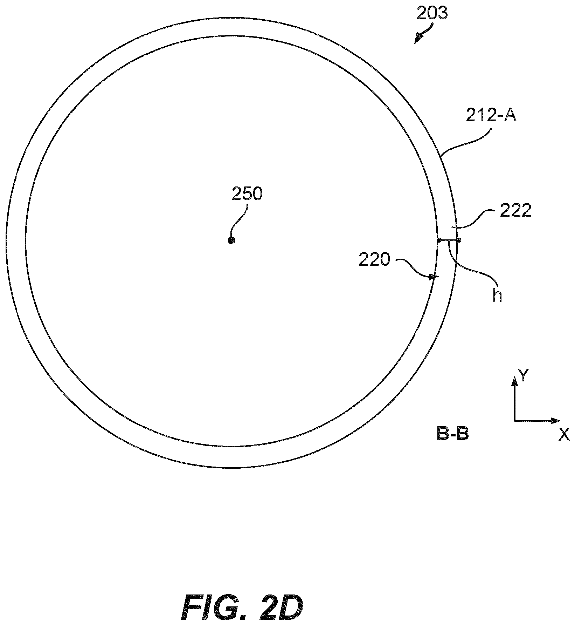

FIGS. 2A, 2B, 2C, and 2D illustrate various perspectives and cross-sectional views of a stringerless sandwich fuselage barrel, in accordance with one or more embodiments. As depicted, fuselage barrel 200 is defined by a lateral axis (X-axis), a longitudinal axis (Z-axis), and a vertical axis (Y-axis). In some embodiments, fuselage barrel 200 may be a portion of the hull of an aircraft fuselage, such as fuselage 150. A center axis 250, parallel to the Z-axis, runs through the center of fuselage barrel 200.

Fuselage barrel 200 may comprise multiple barrel sections. The barrel sections may be fabricated as an entire section or in two halves, right and left, with longitudinal bondlines. For example, five barrel sections are depicted in FIG. 2A. One barrel section may be formed by curved sandwich panels 210-A and 210-B, and another barrel section by curved panels 212-A and 212-B. Additional panels 214-A, 216-A, and 218-A are shown along with respective corresponding panels 214-B, 216-B, and 218-B, respectively. The corresponding panels of a barrel section may be joined at bondlines or connections 270 and 272 to form a barrel section. Although each barrel section is depicted as comprising two panels, it should be recognized that a single barrel section may comprise additional panels joined at additional bondlines or connections. In some embodiments, an entire barrel section may be formed by a single sandwich panel assembly.

FIG. 2B depicts a cross section 201of a barrel panel, such as panel 212-A, from the A-A viewpoint corresponding to the X-Z plane. FIG. 2C depicts a cross section 202 of a barrel panel, such as panel 212-A, from the B-B view point corresponding to the X-Y plane. FIG. 2D depicts cross section 203 of another barrel panel embodiment, such as panel 212-A, from the B-B view point corresponding to the X-Y plane. Although FIGS. 2B, 2C, and 2D are described with reference to panel 212-A, it should be recognized that the cross-sectional views 201, 202, and 203 may refer to any one of the panels of fuselage barrel 200. The dimensions of the fuselage barrel and panels may vary depending on the particular vehicle and/or desired structural characteristics. In particular examples, a fuselage barrel section may include a diameter ranging from 2 to 7 meters. The length of an example barrel section (i.e., from connection 274 to connection 276) may range from 0.5 to 1 meters.

FIG. 2B depicts panel 212-A joined to panel 210-A at connection 274 and to panel 214-A at connection 276. FIG. 2C depicts panel 212-A joined to panel 212-B (shown in dashed lines) at connections 270 and 272. Connections 270, 272, 274, and 276 represent various possible connections between separate sandwich panels of neighboring fuselage barrel sections. For example, two panels may be joined directly at the depicted connections. In some embodiments, neighboring panels may be bonded together using adhesives and/or assembled together using fasteners. As another example, the illustrated connections may represent additional panels and/or doublers used to join the separate panels.

In various embodiments, panel 212-A comprises cavity 220 defined by an outer skin member and an inner skin member, which are joined at edges 230-A, 230-B, 232-A, and 323-B. Cavity 220 may be divided into various portions as shown by dashed lines. Such portions include center portion 222, transition portions 224-A and 224-B, and transition portions 226-A and 226-B. In some embodiments, center portion 222 may include a substantially uniform cross-sectional thickness or height (h) in both cross sections 201 and 202. In an example embodiment, height, h, of the center portion 222 may be up to 8cm in thickness. However, the cross-sectional thickness of the center portion may vary slightly. For example, center portion 222 may be thickest at the very center in some embodiments.

The transition portions extend from the center portion to respective edges of the panel in which the cross-sectional area gradually taper from the thickness of the center portion and narrows to the edges where the skin members are joined. As used herein, transition portions may be referred to as "tapered portions." Thus, in some embodiments, a sandwich panel with four straight edges may include a cavity with a center portion and four tapered portions extending therefrom. Transition portions 224-A and 224-B extend from center portion 222 to edges 230-A and 230-B, respectively. Transition portions 226-A and 226-B extend from the center portion 222 to edges 232-A and 232-B, respectively. The cross-sectional thickness of cavity 220 at each of the transition portions gradually decreases from center portion 222 to each of the respective edges.

As previously described, in some embodiments, the sandwich panel assembly may be configured as an entire fuselage barrel section, rather than a half or portion of the fuselage barrel (e.g., the fuselage barrel halves shown in FIG. 2C). For example, FIG. 2D illustrates a cross section of center portion 222 of the cavity 220 of such a fuselage barrel section formed by described sandwich panel assemblies from the B-B viewpoint. In such embodiments, the B-B cross section of panel 212-A shows center portion 222 of cavity 220 with a uniform cross-sectional height, h, with no tapered portions. In some embodiments, the cross-sectional height of the cavity (from the B-B viewpoint) is also uniform, or substantially uniform, within the tapered portions 224-A and 224-B, shown in FIG. 2B.

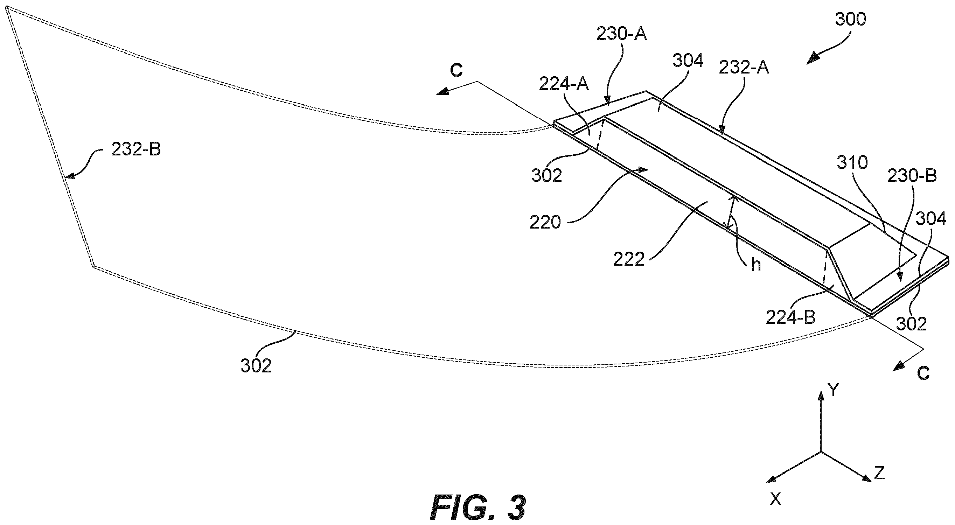

With reference to FIG. 3, shown is a perspective cross-sectional view of a stringerless sandwich fuselage panel 300, in accordance with one or more embodiments. FIG. 3 shows a cross section from the C-C viewpoint corresponding to the Y-Z plane. The C-C viewpoint is analogous to the A-A viewpoint at another position along the curved panel, such as near connection 272. In various embodiments, panel 300 may be any one of the sandwich panels of fuselage 200, such as panel 212-A, and will be described with reference to the portions and components from FIGS. 2A-2C.

As shown, in various embodiments, panel 300 comprises outer skin member 302 and inner skin member 304 which are joined to form edges 230-A, 230-B, 232-A, and 232-B to define cavity 220. As previously described, cavity 220 comprises center portion 222 and transition portions including transition potions 224-A and 224-B which extend from center portion 222 to edges 230-A and 230-B, respectively. Cavity 220 may further comprise additional transition portions extending to the other edges 232-A and 232-B (not shown).

The sandwich panels depicted in the previous Figures include edges which are straight providing a rectangular profile. Diagonal edges, such as diagonal edge 310 may delineate an imaginary border between adjacent transition portions, such as transition portion 224-B and transition portion 226-A. However, in example embodiments, adjacent transition portions may be interconnected spaces within the cavity.

In some embodiments, at least a portion of sandwich panel assemblies may include curved or round profiles with curved or round edges. In such panels, the geometry and configuration of transition portions will depend on the shape of the skin members defining the center portion and the edges where the skin members are joined. For example, two round skin members may conceivably include a single circular transition portion extending around the center portion to the joined edges of the skin members.

The dimensions of the portions of cavity 220 as depicted may be exaggerated for illustrative purposes in FIG. 3. In various embodiments, the outer and/or inner skin members taper off at the ends in order to be joined together and form flattened edges of solid laminate. The flattened edges allow the panel to be joined or fastened with other panels under high clamping forces. In various embodiments, the skin members may comprise materials such as titanium, aluminum, or carbon fiber such as Carbon Fiber Reinforced Polymer Composites (CFRP). Cavity 220 of sandwich panel 300 is filled with a core structure sandwiched between outer skin member 302 and inner skin member 304. The core structure comprises a honeycomb structure and cured foam adhesive. In various embodiments, the core structure may further comprise a preformed foam structure (of metal, ceramic, and/or polymers).

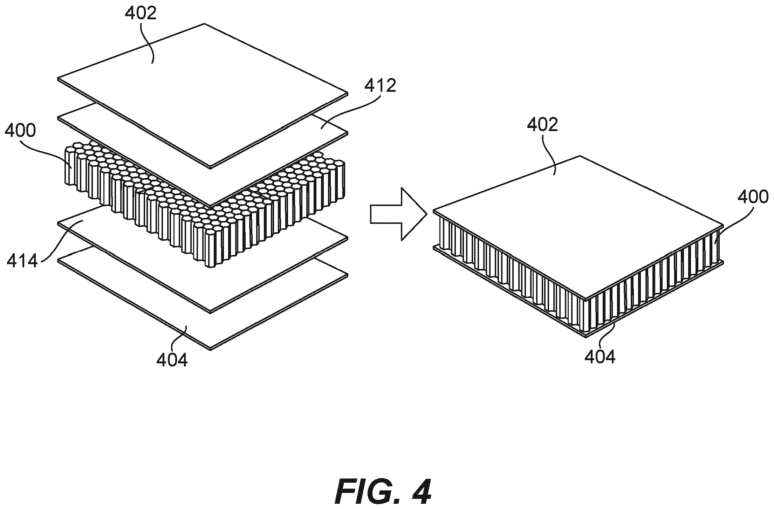

With reference to FIG. 4, shown is an example honeycomb core structure 400 of a stringerless sandwich fuselage panel, in accordance with an illustrative embodiment. The core material may be a honeycomb structure comprising metal, paper, or polymers. For example, a honeycomb structure may comprise resin-impregnated aramid paper core, or NOMEX paper that is phenolic coated. In various embodiments, the honeycomb core 400 is bonded to skin members 402 and 404 via adhesive sheets 412 and 414, respectively. In some embodiments, the adhesive sheets may be any one of various suitable structural adhesives. In some embodiments, foaming adhesives may be used as adhesive sheets 412 and 414. Skin members 402 and 404 may be any one of skin members or face sheets previously described, such as outer skin member 302 or inner skin member 304.

Use of honeycomb core structures in sandwich panel assemblies provides desired structural integrity and weight without the need for support structures, such as stringers. Thus, the complex manufacturing processes required in attaching support structures may be reduced or avoided. As described, attachment of support structures involves significant labor, time, cost, and space. For example, support tools are typically required to provide structural or positional support for stringers as they are cured or otherwise set into place. Various types of mandrels may be used as support tools, such as solid rubber mandrels, expanding rubber mandrels, washout mandrels formed of clay or powder, and flyaway foam mandrels. In other examples, support tool may be an inflatable bladder type. In some embodiments, various radius fillers may also be included, such as noodles that may function to fill in gaps between the stringer, support tool, base charge, or skin member to prevent resin from pooling during curing.

Furthermore, in stringer panel assemblies, such support tooling must be precisely aligned on the skin member or base charge in order to accurately control the stringer location, as well as the positioning and shape of the stringer. In existing panel assemblies, placement and/or alignment of support tools and/or stringers is most often done with large tool aids to lift, transport, and place the support tools. Accurate placement may be additionally achieved by various methods including the use of optical laser templates to guide manual placement within borders defined by lasers. Various other alignment mechanisms may be implemented to guide manual placement of the support tool. Efforts to ensure accurate manual alignment of support tools may further result in increased labor requirements and longer build times.

Additionally, support tooling generally have long lengths that may reach up to the length equal to the length of a stringer. For example, a stringer for a 777X aircraft may be up to 34 meters (110 feet) long. As such, a 110 foot solid rubber mandrel may include a significant weight. Such large support tooling may also require significant handling tools and equipment to form, flip, locate, and transport the support tooling. For example, handling pick and place equipment may be used to transport and maneuver such tooling. Because of their size, dimension variability in the support tooling placement may also occur. This may further impact fabrication efficiencies and increase labor time and costs of manufacturing throughput.

Thus, multiple shorter sandwich panel assemblies may be constructed more quickly, which may then be connected to form fuselage barrel sections. However, in order to properly fill the cavity of a sandwich panel, a honeycomb core structure (or other preformed foam core structure) must be precisely positioned onto one or more of the skin members. Such core structures must also be precisely machined to accurately match the final geometry of the cavity. Such processes may be difficult and expensive, typically requiring a variety of machine tools such as cutters, drills, and sanders. In particular configurations or geometries, maintaining the machine quality can prove challenging during the manufacturing process. Such machining further removes material from the honeycomb structure, potentially reducing the mechanical strength of the honeycomb structure.

Edge enclosures and closeouts may also be required in cutoff areas to hide exposed portions of the honeycomb structure, provide rigidity and local reinforcement to edges, support hardware, seal edges from outside elements, or for placement of support for structural members. Such edge enclosures may include epoxy edge fills, wood framing, c-channels, or press-brake bending of the face sheets or other surface.

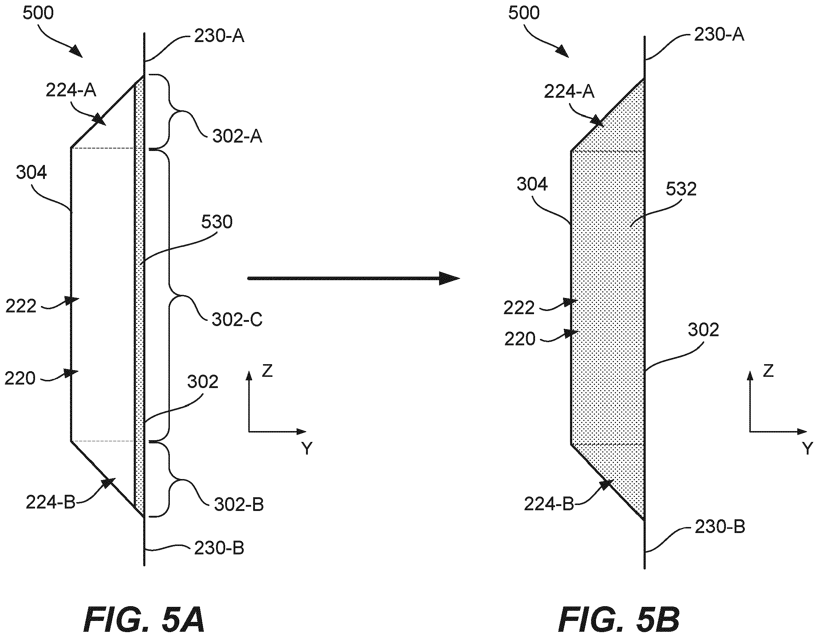

In examples not presently being claimed, but which may be useful for understanding aspects thereof, the core material may additionally, and/or alternatively comprise an expandable foaming adhesive, such as polymer foam adhesives or epoxy based foam adhesives. Such foam adhesives may be implemented as a core material to solve the challenges presented by traditional honeycomb core materials. Such foaming adhesives may comply with flame-smoke-toxicity (FST) regulations, Federal Aviation Regulation (FAR) 25.853 governing flammability of aircraft cabin interiors, and Airbus Fire Safety (AFIS) Requirement ABD0031. With reference to FIGS. 5A and 5B shown is a cross-sectional view of a stringerless sandwich fuselage panel 500 with a foam adhesive core, in accordance with an illustrative example. FIG. 5A shows panel 500 prior to curing and FIG. 5B shows panel 500 after the curing process.

As shown, panel 500 comprises outer skin member 302 and inner skin member 304 joined at edges 230-A and 230-B. Panel 500 further comprises cavity 220 formed between skin members 302 and 304 with center portion 222 and transition portions 224-A and 224-B. Various portions of outer skin member 302 are identified. Portions 302-A and 302-B of the outer skin member correspond to transition portions 224-A and 224-B, respectively, while portion 302-C corresponds to center portion 222 of the cavity.

In various such examples, an uncured foaming adhesive 530 may be applied to all the portions of outer skin member 302 within cavity 220. In some such examples, the foaming adhesive is an extruded sheet or strip. In some examples, the adhesive sheet is of a thickness between 1 to 10 millimeters (mm) (0.05 inches to 0.4 inches). The adhesive sheet may be cut to fit various geometries of the cavity. The adhesive sheet may also include round or square cross sections to more accurately meet any specific geometry parameters of the cavity. In some such examples, the foam adhesive may be provided in the form of extruded beads. The tacky nature of the adhesive sheet also eliminates the need for any additional adhesive to pre-bond the sheet to the corresponding skin member.

Various formulations of foaming adhesives may be used based on compatibility with different processing methods (autoclave, oven, and press) and cure cycles. In an example, the adhesive sheet may be applied to the inner surface of the outer skin member and enclosed within the cavity by the joining of inner skin member with the outer skin member at edges, such as edges 530-A and 530-B. As depicted, uncured adhesive sheet 530 is applied to portions of the outer skin member within center portion 522 and transition portions 524-A and 524-B.

In an example, a sheet of epoxy-based foam adhesive may be heated and cured at temperatures between 121 to 177 degrees Celsius (250 to 350 degrees Fahrenheit) and expand up to 450% to fill cavity 520, from an average uncured density of 1.2g/cc to a lowest density of about 0.2 - 0.3g/cc (12 lbs/ft³). The resulting cured adhesive 532 (shown in FIG. 5B) fills the entire cavity 520 sandwiched between skin members 302 and 304. In some examples, the cured foam adhesive may provide a shear strength of about 28 to 69 bar (about 400 to 1000 psi), and a compressive strength of about 48 bar (about 695 psi).

Use of expanding foam adhesives as lightweight core materials provides improved structural strength to the sandwich panel and results in improvements in addition to the benefits provided by the use of honeycomb core structures (previously described) by reducing or eliminating many manufacturing challenges. Because the adhesive foam expands to precisely fill the cavity within the panel, the complex tooling and machining processes to form the honeycomb structures may be avoided.

The manufacturing of panels is further improved by providing a low density core material that is more easily positioned within the sandwich structure. Sheets or strips of foam adhesive are easily cut or shaped to fit the particular geometry and dimensions of a particular panel and easily positioned onto face sheets without additional pre-bonding adhesives required by honeycomb core structures. In some examples, adhesive quality of the uncured adhesive sheets or strips may allow them to be removed or repositioned as needed. Production time required to accurately align a honeycomb core structure and other structures within the cavity may further be reduced because the expansion of the foam adhesive may also allow for potential inaccuracies in the placement of the foam adhesive sheet on the skin member.

Furthermore, foaming adhesives in the form of extruded beads may be deposited into a cavity before it is sealed between skin members. The desired amount of adhesive beads may be easily determined and controlled by weight. Furthermore, such beads may be easily positioned and evenly dispersed within the cavity. In some examples, loose beads may be placed within a sealed vacuum bag made of the same or similar material to keep the beads in position within the cavity. Such vacuum bag may be tacky in nature and applied directly onto the skin member. In some examples, the beads or vacuum bag are coated onto an adhesive film or sheet within a designated area of the cavity. In some examples, the extruded beads may include a tacky or adhesive surface, which allow the beads placed directly onto skin members and remain in designated areas of the cavity.

Thus, by implementing a single material and reducing the manufacturing processes required, manufacturing costs are significantly reduced, and production rate is greatly increased. As such, where production costs and production rates are critical considerations, a core structure of expandable foam adhesive may be more desirable.

Expanding foam adhesives also provide several structural improvements over traditional honeycomb sandwich structures. For example, variable density of the final core structure may be achieved by controlling expansion rate. Variable density may be achieved by adjusting the volume of adhesive material with respect to a given volume of the cavity. For example, in the tapered transition portions, the cavity volume gradually decreases toward the edges. Thus, if the same amount of foam adhesive is applied to designated areas corresponding to the cavity, there is a higher volume of adhesive with respect to the volume of the tapered portions as compared to the center portion. Variable density may also be achieved by applying additional foaming adhesive in a particular portion of a designated area of the cavity. In some examples, variable density may be achieved by adjusting the temperature during the curing process in order to control the expansion rate, and the final density, of the final core material in various layers or portions within the cavity.

Additionally, the geometry of the cavity may also cause variable density of the adhesive foam during expansion which imparts desirable mechanical properties. While the density of the cured adhesive foam may be relatively uniform in the center portion of the cavity because the cross-sectional height of the center portion is uniform or substantially uniform, variations in density will occur in the transition portions of the cavity due to transition in height from the center portion to the edges. Because the height of the transition portions gradually taper toward the edges, the cured core structure may include a higher density toward the edges due to a larger quantity of adhesive material for a given volume causing less total expansion. The gradually increasing density of the core material toward the edges provides greater structural integrity at the edges where attachment points are located and greater structural strength is desired to withstand clamping, shear, compression, and/or bending loads.

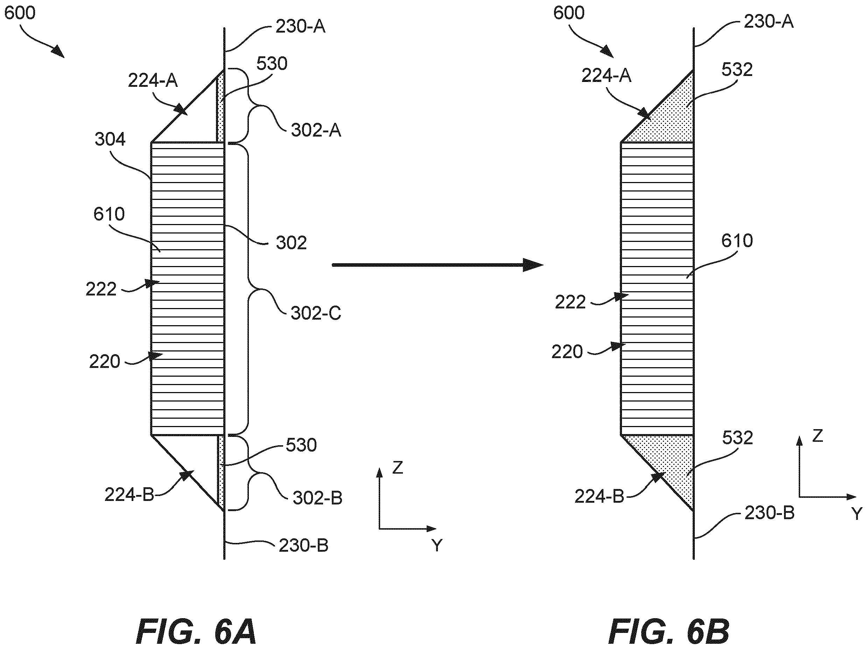

In various embodiments, the described foaming adhesives are combined with existing honeycomb and optionally further with preformed foam core structures to create a sandwich panel with a hybrid core structure. Such hybrid core structure may provide additional benefits to the use of existing honeycomb core structures or foaming adhesives alone. With reference to FIGS. 6A and 6B shown are cross-sectional views of another stringerless sandwich fuselage panel 600 with a hybrid core configuration in accordance with an illustrative embodiment. FIG. 6A shows panel 600 prior to curing and FIG. 6B shows panel 600 after the curing process.

As with panel 500, panel 600 comprises outer skin member 302 and inner skin member 304 joined at edges 230-A and 230-B. Panel 600 further comprises cavity 220 formed between skin members 302 and 304 with center portion 222 and transition portions 224-A and 224-B. The outer skin member includes portions 302-A and 302-B corresponding to transition portions 224-A and 224-B, respectively, while portion 302-C corresponds to center portion 222 of the cavity. In various embodiments, an uncured foaming adhesive 530 is applied to portions 302-A and 302-B of outer skin member 302 within the transition portions of cavity 220.

The hybrid configuration of panel 600 includes both a honeycomb structure and foaming adhesive as the core structure sandwiched between the skin members. As depicted in FIG. 6A, panel 600 includes a preformed core structure 610 positioned within the center portion 222 of cavity 220, and uncured foam adhesive 530 positioned within transition portions 224-A and 224-B. In embodiments, core structure 610 is a honeycomb structure, such as honeycomb structure 400 previously described with reference to FIG. 4. In some embodiments, core structure 610 may be a pre-formed core structure of ceramic, metal, or polymer foam. In embodiments, such hybrid core structure combines the benefits of both honeycomb core structures and expanding foam adhesives into a structural panel.

Because center portion 222 of cavity 220 comprises a uniform or substantially uniform cross-sectional height, core structure 610 may require very little or no machining to accurately conform to the geometry of center portion 222, thereby reducing manufacturing time and costs as compared to existing honeycomb sandwich structures. As such, core structure 610 may only need to be cut to fit the dimensions of center portion 222. Additionally, because the honeycomb structure is not being machined, no material is removed avoiding any reduction in mechanical strength.

As described, foam adhesive is placed on portions 302-A and 302-B of the outer skin member within the transition portions of cavity 220. After curing, the resulting cured adhesive 532 (shown in FIG. 6B) completely fills the transition portions 224-A and 224-B of cavity 220 sandwiched between skin members 302 and 304. Thus, the hybrid configuration benefits from the variable increasing density of the cured foam adhesive core structure toward the narrower edges. Furthermore, the expanded foam adhesive may further function as edge enclosures for the exposed edges of core structure 610, thereby reducing overall material and time required for manufacturing.

In some embodiments, the hybrid core structure may implement honeycomb structures in high acreage areas with constant cross-sectional thickness, which may reduce manufacturing costs as compared to using only foam adhesive for the core structure. Additionally, particular examples of foaming adhesives may comprise a higher density after curing than certain honeycomb structures. As such, the use of lighter and less dense honeycomb structures in the hybrid core structure may further reduce the overall weight of panel 600 as compared to a panel with only cured foam adhesive as a core structure. Thus, the hybrid core structure may be more desirable where weight considerations are critical.

### Method of Operation

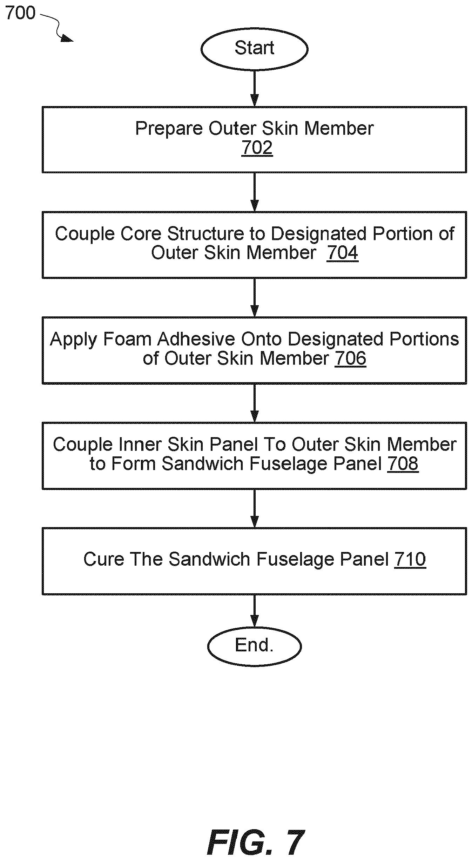

Also provided are methods of manufacturing a stringerless sandwich fuselage barrel. With reference to FIG. 7, shown is an example process 700 for manufacturing a stringerless sandwich fuselage panel, in accordance with an illustrative embodiment. In various embodiments, various structures and materials described may be automatically formed and deposited by a robotic end effector with minimum tooling during manufacturing.

At 702, an outer skin member is prepared. For example, the outer skin member may be outer skin member 302. In some embodiments, preparing the outer skin member may include various processes, including forming, polishing, or curing. In some embodiments, the outer skin member is shaped by a forming tool into the described curved configurations. In some embodiments, the outer skin member is shaped into an outer tube structure, such as where an entire barrel section may be formed by a single sandwich panel assembly. In some embodiments, the outer skin member may be further prepared by placing adhesive sheets or other composite materials (e.g., pre-impregnated "prepreg" layers) on designated areas. For example prepreg layers may be comprise composite fibers pre-impregnated with a thermoset polymer matrix material or resin system, such as epoxy. For example, the resin system (typically epoxy) may already include the proper curing agent. In some embodiments, the composite material may be resin infused or thermoformed.

Once the inner surface of the outer skin member is prepared, a preformed core structure, comprising a honeycomb structure, is coupled to a designated portion of the outer skin member at 704. The honeycomb structure, such as core structure 610, is sized and positioned on a portion (302-C) of the outer skin member corresponding to the center portion of the cavity of the sandwich fuselage panel. In some embodiments, the adhesive sheet may be first placed upon the honeycomb structure rather than on the skin member before placement of the honeycomb structure onto the inner surface of the skin member.

At 706, a foam adhesive is applied onto designated portions of the outer skin member. The foam adhesive is positioned on portions (302-A and 302-B) of the outer skin member corresponding to the transition portions of the cavity.

As previously described, the foam adhesive may be configured as strips or sheets which may be cut and sized to fit the designated portions. In some embodiments, the foam adhesive may be configured as extruded beads. In some embodiments, the foam adhesive may be applied directly to the inner surface of the outer skin member without additional pre-bonding adhesives because of the tacky nature of the foam adhesive. In some embodiments, extruded beads of foam adhesive may be placed into a vacuum bag of the same material. The vacuum bag may then be shaped into a desired geometry and placed directly onto the skin member without additional pre-bonding adhesive. In some embodiments, the vacuum bag may be applied to the skin member via an adhesive layer.

An inner skin member, such as inner skin member 304, may then be coupled to the outer skin member at 708 to form the sandwich fuselage panel. In some embodiments, the inner skin member is prepared similarly to the outer skin member. For example, various forming tools may be implemented to shape the inner skin member into a desired curved or tubular configuration. In some embodiments, the inner skin member is positioned opposite to the outer skin member with core structures and/or foam adhesives in between. Where the outer skin member is a complete cylindrical tube structure, a tubular inner skin member may be placed within the center of the outer skin member with the core structures and/or foam adhesives in between the skin members.

A forming tool may then shape the inner skin member by urging the inner skin member towards the outer skin member against the core structure. The forming tool continues to urge one or more ends of the inner skin member toward the outer skin member to form the transition potions of the cavity and flattened edges of the sandwich panel assembly. In some embodiments, an adhesive sheet may be applied to the inner surface of the inner skin member corresponding to the area of contact with the honeycomb or foam core structure (i.e., corresponding to the center portion of the cavity). In examples not presently being claimed, where only foam adhesive is used (no central honeycomb or foam structure), the forming tool may shape or position the inner skin member to the desired height (h) of the center portion of the cavity with respect to the outer skin member, and urge the ends of the inner skin member against the outer skin member to form the transition portions and flattened edges.

As previously described, the skin members may contact each other along edges forming the cavity in between. In various embodiments, the skin members may be coupled at the edges via mechanical fixings, such as bolts for example. In some embodiments, adhesives or sealants may also be applied to the contact surfaces between the skin members to secure the attachment and/or seal the cavity. Although the process is described as positioning the various materials on the outer skin panel, in some embodiments, the core materials may be first positioned on the inner skin member before sealing the cavity with the outer skin member.

The sandwich fuselage panel is then cured at 710. In some embodiments, the formed fuselage panel is placed within a vacuum bag for additional pressure to hold the skin members layers in place for curing. A combination of pressure and heat may then be applied to the fuselage panel to cause the foam adhesive to expand and fill the respective portions of the cavity. The curing process may additionally secure the bond between the honeycomb structure and skin members via adhesive sheets. For example, the sandwich panel may be cured at temperatures between 121 to 177 degrees Celsius (250 to 350 degrees Fahrenheit).

As previously described, the temperature may be adjusted during the curing process to modify the expansion rate of the foam adhesive to achieve a desired density of the core structure.

Because the need for support structures, such as stringers, are eliminated or reduced, the manufacturing methods described herein require fewer tools for positioning and attaching such support structures. By eliminating long support structures, smaller panels may also be constructed in sections. This significantly reduces the amount of space required for manufacturing panels and other components. The use fewer materials and tools also reduces costs. Production time is further reduced because tooling and forming of the honeycomb structure is not required. Additionally, sheets of foam adhesives are easily sized and applied. Thus, overall production rate is increased while costs are reduced.

### Aircraft Examples

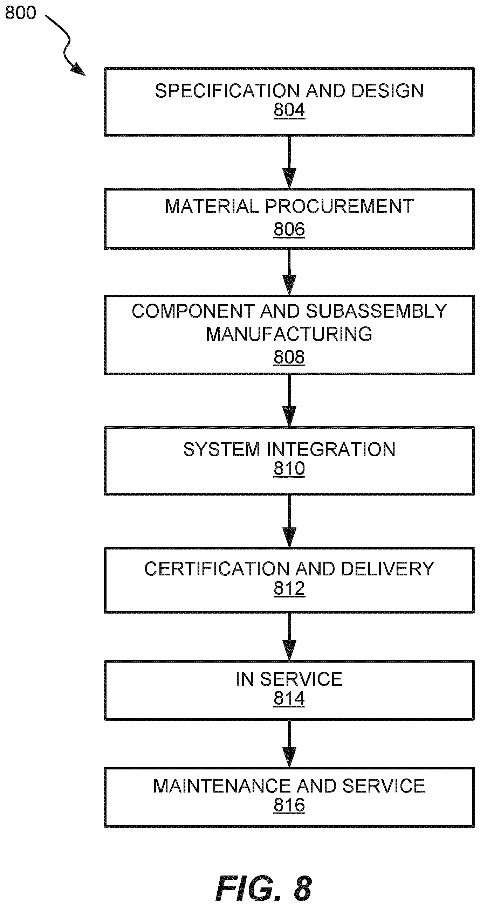

Examples of the present disclosure may be described in the context of aircraft 100 as shown in FIG. 1 and aircraft manufacturing and service method 800 as shown in FIG. 8. As previously described, FIG. 1 is a schematic illustration of an aircraft 100 which may comprise various stringerless sandwich fuselage barrels as described herein. As depicted in FIG. 1, aircraft 100 comprises fuselage 150 with wings 120. Aircraft 100 may also include engines 130 supported by wings 120. Although an aerospace example is shown, the principles disclosed herein may be applied to other industries, such as the automotive industry. Accordingly, in addition to aircraft 100, the systems, apparatus, and methods disclosed herein may apply to other vehicles, e.g., land vehicles, marine vehicles, space vehicles, etc.

FIG. 8 is a block diagram of aircraft production and service methodology that may utilize methods and assemblies described herein. During pre-production, illustrative method 800 may include specification and design (block 804) of aircraft 100 and material procurement (block 806). During production, component and subassembly manufacturing (block 808) and inspection system integration (block 810) of aircraft 100 may take place. Described apparatus, and corresponding methods of operation and manufacture, may be implemented in any of specification and design (block 804) of aircraft 100, material procurement (block 806), component and subassembly manufacturing (block 808), and/or inspection system integration (block 810) of aircraft 100.

Thereafter, aircraft 700 may go through certification and delivery (block 812) to be placed in service (block 814). While in service, aircraft 700 may be scheduled for routine maintenance and service (block 816). Routine maintenance and service may include modification, reconfiguration, refurbishment, etc. of one or more inspection systems of aircraft 100. Described apparatus, and corresponding methods of operation and manufacture, may be implemented in any of certification and delivery (block 812), service (block 814), and/or routine maintenance and service (block 816).

Each of the processes of illustrative method 800 may be performed or carried out by an inspection system integrator, a third party, and/or an operator (e.g., a customer). For the purposes of this description, an inspection system integrator may include, without limitation, any number of aircraft manufacturers and major-inspection system subcontractors; a third party may include, without limitation, any number of vendors, subcontractors, and suppliers; and an operator may be an airline, leasing company, military entity, service organization, and so on.

### Conclusion

In the above description, numerous specific details are set forth to provide a thorough understanding of the disclosed concepts, which may be practiced within the scope of the appended claims without some of these particulars. In other instances, details of known devices and/or processes have been omitted to avoid unnecessarily obscuring the disclosure.

While the present disclosure has been particularly shown and described with reference to specific embodiments thereof, it will be understood by those skilled in the art that changes in the form and details of the disclosed embodiments may be made without departing from the scope of the present disclosure, as defined by the appended claims.

The description of the different illustrative embodiments has been presented for purposes of illustration and description, and is not intended to be exhaustive or limited to the embodiments in the form disclosed. Many modifications and variations will be apparent to those of ordinary skill in the art. It is therefore intended that the present disclosure be interpreted to include all variations that fall within the scope of the present disclosure, as defined by the appended claims.

Accordingly, the present examples are to be considered as illustrative and not restrictive.

Although many of the components and processes are described above in the singular for convenience, it will be appreciated by one of skill in the art that multiple components and repeated processes can also be used to practice the techniques of the present disclosure.

## Claims

1. A sandwich fuselage panel (212-A) comprising:
an outer skin member (302);
an inner skin member (304) coupled to the outer skin member at a first edge (230-A) and a second edge (230-B), wherein the outer skin member and the inner skin member form a cavity (220) comprising: a center portion (222) including a uniform or substantially uniform cross-sectional height, a first transition portion (224-A) extending from the center portion to the first edge, and a second transition portion (224-B) extending from the center portion to the second edge; and
a cured foam adhesive (532) occupying each of the first transition portion and the second transition portion,
further comprising a core structure (610) occupying the center portion of the cavity, wherein preferably the core structure (610) fits the dimensions of the center portion (222),
wherein the core structure is a honeycomb structure (400), wherein the cured adhesive (532) completely fills the transition portions (224-A, 224-B) of the cavity (220) sandwiched between the outer skin member (302) and the inner skin member (304).

2. The sandwich fuselage panel (212-A) according to claim 1 wherein the honeycomb structure comprises at least one of: metal, paper, or polymer.

3. The sandwich fuselage panel of claim 1 or 2, wherein the honeycomb structure is coupled to each of the outer skin member and the inner skin member via an adhesive layer (412, 414).

4. The sandwich fuselage panel of claims 1-3,
wherein a density of the cured foam adhesive in the first transition portion gradually increases from the center portion to the first edge, and
wherein a density of the cured foam adhesive in the second transition portion gradually increases from the center portion to the second edge.

5. The sandwich fuselage panel of claims 1-4, wherein the outer skin member and the inner skin member are curved.

6. The sandwich fuselage panel of claims 1-5, wherein the cured foam adhesive comprises a polymer foam adhesive.

7. The sandwich fuselage panel of claims 1-6 wherein the outer skin member comprises one or more selected from the following: aluminum, titanium, and carbon fiber reinforced polymer (CFRP).

8. The sandwich fuselage panel of claims 1-7 wherein the uniform or substantially uniform height is between the skin members (302, 304).

9. A method (700) comprising:
applying (706) a foam adhesive (530) within a cavity (220) formed by an outer skin member (302) coupled to an inner skin member (304) at a first edge (230-A) and a second edge (230-B),
wherein the cavity comprises: a center portion (222) including a uniform or substantially uniform cross-sectional height, a first transition portion (224-A) extending from the center portion to the first edge, and a second transition portion (224-B) extending from the center portion to the second edge,
coupling (704) a core structure (610) to each of the outer skin member and the inner skin member within the center portion of the cavity, wherein the core structure comprises a honeycomb structure (400), wherein preferably the core structure (610) fits the dimensions of the center portion (222),
wherein the foam adhesive is applied to a first portion (302-A) of the outer skin member within the first transition portion and a second portion of the outer skin member (302-B) within the second transition portion,
curing (710) the foam adhesive such that the foam adhesive expands to fill the respective portions of the cavity, the cured adhesive (532) completely filling the transition portions (224-A, 224-B) of the cavity (220) sandwiched between the outer skin member (302) and the inner skin member (304).

10. The method of claim 9, wherein the core structure is coupled to each of the outer skin member and the inner skin member via an adhesive layer (412, 414).

11. The method of claims 9-10, further comprising:
applying (706) the foam adhesive to a third portion (302-C) of the outer skin member within the center portion of the cavity.

12. The method of claims 9-11, wherein after curing, a density of the foam adhesive in the first transition portion gradually increases from the center portion to the first edge, and a density of the foam adhesive in the second transition portion gradually increases from the center portion to the second edge.

13. The method of claims 9-12, wherein the outer skin member and the inner skin member are curved.

14. The method of claims 9-13 wherein the cured foam adhesive comprises a polymer foam adhesive.

15. An aircraft comprising one or more sandwich fuselage panels (212-A) according to any of the claims 1-8.

## Patentansprüche

1. Sandwich-Rumpfplatte (212-A), die Folgendes umfasst:
ein Außenhautelement (302);
ein Innenhautelement (304), das mit dem Außenhautelement an einer ersten Kante (230-A) und einer zweiten Kante (230-B) verbunden ist, wobei das Außenhautelement und das Innenhautelement einen Hohlraum (220) bilden, der Folgendes umfasst: einen mittleren Abschnitt (222), der eine gleichmäßige oder im Wesentlichen gleichmäßige Querschnittshöhe enthält, einen ersten Übergangsabschnitt (224-A), der sich von dem mittleren Abschnitt zu der ersten Kante erstreckt, und einen zweiten Übergangsabschnitt (224-B), der sich von dem mittleren Abschnitt zu der zweiten Kante erstreckt; und
einen ausgehärteten Schaumstoffkleber (532), der sowohl den ersten Übergangsabschnitt als auch den zweiten Übergangsabschnitt einnimmt,
ferner umfassend eine Kernstruktur (610), die den mittleren Abschnitt des Hohlraums einnimmt, wobei vorzugsweise die Kernstruktur (610) zu den Abmessungen des mittleren Abschnitts (222) passt,
wobei es sich bei der Kernstruktur um eine Wabenstruktur (400) handelt, wobei der ausgehärtete Schaumstoffkleber (532) die Übergangsabschnitte (224-A, 224-B) des zwischen dem Außenhautelement (302) und dem Innenhautelement (304) sandwichartig eingeschlossenen Hohlraums (220) vollständig ausfüllt.

2. Sandwich-Rumpfplatte (212-A) nach Anspruch 1, wobei die Wabenstruktur mindestens eines der folgenden Materialien umfasst: Metall, Papier oder Polymer.

3. Sandwich-Rumpfplatte nach Anspruch 1 oder 2, wobei die Wabenstruktur jeweils über eine Klebeschicht (412, 414) sowohl mit dem Außenhautelement als auch mit dem Innenhautelement gekoppelt ist.

4. Sandwich-Rumpfplatte nach den Ansprüchen 1 bis 3,
wobei die Dichte des ausgehärteten Schaumstoffklebers in dem ersten Übergangsabschnitt von dem mittleren Abschnitt zu der ersten Kante hin allmählich zunimmt, und
wobei die Dichte des ausgehärteten Schaumstoffklebers in dem zweiten Übergangsabschnitt von dem mittleren Abschnitt zu der zweiten Kante hin allmählich zunimmt.

5. Sandwich-Rumpfplatte nach einem der Ansprüche 1 bis 4, wobei das Außenhautelement und das Innenhautelement gekrümmt sind.

6. Sandwich-Rumpfplatte nach einem der Ansprüche 1 bis 5, wobei der ausgehärtete Schaumstoffkleber einen Polymer-Schaumstoffkleber umfasst.

7. Sandwich-Rumpfplatte nach einem der Ansprüche 1 bis 6, wobei das Außenhautelement eines oder mehrere der folgenden Elemente umfasst: Aluminium, Titan und kohlenstofffaserverstärktes Polymer (CFK).

8. Sandwich-Rumpfplatte nach einem der Ansprüche 1 bis 7, wobei die gleichmäßige oder im Wesentlichen gleichmäßige Höhe zwischen den Hautelementen (302, 304) liegt.

9. Verfahren (700), das Folgendes umfasst:
Auftragen (706) eines Schaumstoffklebers (530) innerhalb eines Hohlraums (220), der durch ein an einer ersten Kante (230-A) und einer zweiten Kante (230-B) mit einem Innenhautelement (304) gekoppeltes Außenhautelement (302) gebildet wird,
wobei der Hohlraum Folgendes umfasst: einen mittleren Abschnitt (222), der eine gleichmäßige oder im Wesentlichen gleichmäßige Querschnittshöhe enthält, einen ersten Übergangsabschnitt (224-A), der sich von dem mittleren Abschnitt zu der ersten Kante erstreckt, und einen zweiten Übergangsabschnitt (224-B), der sich von dem mittleren Abschnitt zu der zweiten Kante erstreckt,
Koppeln (704) einer Kernstruktur (610) sowohl mit dem Außenhautelement als auch mit dem Innenhautelement innerhalb des mittleren Abschnitts des Hohlraums, wobei die Kernstruktur eine Wabenstruktur (400) umfasst, wobei die Kernstruktur (610) vorzugsweise an die Abmessungen des mittleren Abschnitts (222) angepasst ist,
wobei der Schaumstoffkleber auf einen ersten Abschnitt (302-A) des Außenhautelements innerhalb des ersten Übergangsabschnitts und auf einen zweiten Abschnitt des Außenhautelements (302-B) innerhalb des zweiten Übergangsabschnitts aufgebracht wird,
Aushärten (710) des Schaumstoffklebers, so dass sich der Schaumstoffkleber ausdehnt, um die jeweiligen Abschnitte des Hohlraums zu füllen, wobei der ausgehärtete Kleber (532) die Übergangsabschnitte (224-A, 224-B) des zwischen dem Außenhautelement (302) und dem Innenhautelement (304) sandwichartig eingeschlossenen Hohlraums (220) vollständig ausfüllt.

10. Verfahren nach Anspruch 9, wobei die Kernstruktur jeweils über eine Klebeschicht (412, 414) sowohl mit dem Außenhautelement als auch mit dem Innenhautelement gekoppelt ist.

11. Verfahren nach den Ansprüchen 9 und 10, das ferner Folgendes umfasst:
Auftragen (706) des Schaumstoffklebers auf einen dritten Abschnitt (302-C) des Außenhautelements innerhalb des mittleren Abschnitts des Hohlraums.

12. Verfahren nach einem der Ansprüche 9 bis 11, wobei nach dem Aushärten die Dichte des Schaumstoffklebers in dem ersten Übergangsabschnitt von dem mittleren Abschnitt zu der ersten Kante hin allmählich zunimmt und die Dichte des Schaumstoffklebers in dem zweiten Übergangsabschnitt von dem mittleren Abschnitt zu der zweiten Kante allmählich zunimmt.

13. Verfahren nach einem der Ansprüche 9 bis 12, wobei das Außenhautelement und das Innenhautelement gekrümmt sind.

14. Verfahren nach einem der Ansprüche 9 bis 13, wobei der ausgehärtete Schaumstoffkleber einen Polymer-Schaumstoffkleber umfasst.

15. Flugzeug, das ein oder mehrere Sandwich-Rumpfplatten (212-A) nach einem der Ansprüche 1 bis 8 umfasst.

## Revendications

1. Panneau de fuselage sandwich (212-A) comprenant :
un élément de revêtement extérieur (302) ;
un élément de revêtement intérieur (304) couplé à l'élément de revêtement extérieur au niveau d'un premier bord (230-A) et d'un deuxième bord (230-B), l'élément de revêtement extérieur et l'élément de revêtement intérieur formant une cavité (220) comprenant : une partie centrale (222) présentant une hauteur de section transversale uniforme ou sensiblement uniforme, une première partie de transition (224-A) s'étendant de la partie centrale jusqu'au premier bord, et une deuxième partie de transition (224-B) s'étendant de la partie centrale jusqu'au deuxième bord ; et
un adhésif expansé durci (532) occupant la première partie de transition et la deuxième partie de transition ;
et comprenant en outre une structure d'âme (610) occupant la partie centrale de la cavité, ladite structure d'âme (610) étant de préférence adaptée aux dimensions de la partie centrale (222),
ladite structure d'âme étant une structure en nid d'abeilles (400), ledit adhésif expansé durci (532) remplissant complètement les parties de transition (224-A, 224-B) de la cavité (220) prise en sandwich entre l'élément de revêtement extérieur (302) et l'élément de revêtement intérieur (304).

2. Panneau de fuselage sandwich (212-A) selon la revendication 1, dans lequel la structure en nid d'abeille comprend au moins l'un des matériaux suivants : métal, papier ou polymère.

3. Panneau de fuselage sandwich selon la revendication 1 ou 2, dans lequel la structure en nid d'abeilles est couplée à l'élément de revêtement extérieur et à l'élément de revêtement intérieur par le biais d'une couche adhésive (412, 414).

4. Panneau sandwich de fuselage selon les revendications 1 à 3,
dans lequel la densité de l'adhésif expansé durci dans la première partie de transition augmente progressivement, depuis la partie centrale jusqu'au premier bord, et
dans lequel la densité de l'adhésif expansé durci dans la deuxième partie de transition augmente progressivement, depuis la partie centrale jusqu'au deuxième bord.

5. Panneau de fuselage sandwich selon les revendications 1 à 4, dans lequel l'élément de revêtement extérieur et l'élément de revêtement intérieur sont incurvés.

6. Panneau de fuselage sandwich selon les revendications 1 à 5, dans lequel l'adhésif expansé durci comprend un adhésif expansé polymère.

7. Panneau de fuselage sandwich selon les revendications 1 à 6, dans lequel l'élément de revêtement extérieur comprend un ou plusieurs éléments sélectionnés parmi les éléments suivants : aluminium, titane et polymère renforcé de fibres de carbone (PRFC).

8. Panneau de fuselage sandwich selon les revendications 1 à 7, dans lequel la hauteur uniforme ou sensiblement uniforme se situe entre les éléments de revêtement (302, 304).

9. Procédé (700) comprenant :
l'application (706) d'un adhésif expansé (530) dans une cavité (220) formée par un élément de revêtement extérieur (302) couplé à un élément de revêtement intérieur (304) au niveau d'un premier bord (230-A) et d'un deuxième bord (230-B),
ladite cavité comprenant : une partie centrale (222) comprenant une hauteur de section transversale uniforme ou sensiblement uniforme, une première partie de transition (224-A) s'étendant de la partie centrale jusqu'au premier bord, et une deuxième partie de transition (224-B) s'étendant de la partie centrale jusqu'au deuxième bord,
le couplage (704) d'une structure d'âme (610) à l'élément de revêtement extérieur et à l'élément de revêtement intérieur à l'intérieur de la partie centrale de la cavité, ladite structure d'âme comprenant une structure en nid d'abeilles (400), ladite structure d'âme (610) est de préférence adaptée aux dimensions de la partie centrale (222),
ledit adhésif expansé étant appliqué sur une première partie (302-A) de l'élément de revêtement extérieur à l'intérieur de la première partie de transition et sur une deuxième partie de l'élément de revêtement extérieur (302-B) à l'intérieur de la deuxième partie de transition,
le durcissement (710) de l'adhésif expansé de telle manière que l'adhésif expansé subit une expansion pour remplir les parties respectives de la cavité, l'adhésif durci (532) remplissant complètement les parties de transition (224-A, 224-B) de la cavité (220) prise en sandwich entre l'élément de revêtement extérieur (302) et l'élément de revêtement intérieur (304).

10. Procédé selon la revendication 9, dans lequel la structure d'âme est couplée à l'élément de revêtement extérieur et à l'élément de revêtement intérieur par le biais d'une couche adhésive (412, 414).

11. Procédé selon les revendications 9 et 10, comprenant en outre :
l'application (706) de l'adhésif expansé sur une troisième partie (302-C) de l'élément de revêtement extérieur à l'intérieur de la partie centrale de la cavité.

12. Procédé selon les revendications 9 à 11, dans lequel, après durcissement, la densité de l'adhésif expansé dans la première partie de transition augmente progressivement, depuis la partie centrale jusqu'au premier bord, et la densité de l'adhésif expansé dans la deuxième partie de transition augmente progressivement, depuis la partie centrale jusqu'au deuxième bord.

13. Procédé selon les revendications 9 à 12, dans lequel l'élément de revêtement extérieur et l'élément de revêtement intérieur sont courbés.

14. Procédé selon les revendications 9 à 13, dans lequel l'adhésif expansé durci comprend un adhésif expansé polymère.

15. Aéronef comprenant un ou plusieurs panneaux de fuselage sandwich (212-A) selon l'une quelconque des revendications 1 à 8.
